# EUROPÄISCHE PATENTSCHRIFT

(11) **EP 1 520 470 B1**
(45) Veröffentlichungstag und Bekanntmachung des Hinweises auf die Patenterteilung: **03.12.2008**
(21) Anmeldenummer: 04023286.0
(22) Anmeldetag: 30.09.2004
(51) Int. Cl.: A01K 1/02

(54) **Abferkelbucht mit einem Sauenkäfig**
Pig farrowing and weaning apparatus
Installation pour la mise-bas et le sevrage de porcs

(30) Priorität: 30.09.2003 DE 20315062 U; 21.02.2004 DE 202004002751 U
(43) Veröffentlichungstag der Anmeldung: 06.04.2005
(73) Patentinhaber: Lammers Systemtechnik GmbH & Co. KG, 26901 Rastdorf (DE)
(72) Erfinder: Lammers, Dietrich, 26901 Rastdorf (DE)
(74) Vertreter: Engelmann, Kristiana

(56) Entgegenhaltungen:
- DE-U1- 9 204 397
- US-A- 5 111 769
- US-A- 5 293 834
- US-B1- 6 382 135

## Beschreibung

Die Erfindung betrifft eine Abferkelbucht mit einem Sauenkäfig, der insbesondere zur Aufnahme von tragenden Sauen während und nach einer Abferkelphase vorgesehen ist.

Bekannte Abferkelbuchten (DE 2501909, DE 2840682) sind mit einem Sauenkäfig ausgerüstet, der ausgehend von einem stirnseitigen Futtertrog jeweilige Seitenwände aufweist, die einen im wesentlichen rechteckigen Innenraum begrenzen. Derartige Käfige sind so bemessen, daß in deren Längsrichtung zwischen dem vorderseitigen Futtertrog und rückseitigem Querwandteil die Muttertiere nach der Abferkelphase eine für die Ferkel-Fütterung vorteilhafte Lage einnehmen.

Gemäß einem Vorschlag in G 92 03 631.7 ist eine Abferkelbucht vorgesehen, mit der eine leichtere Handhabung der Muttertiere, z. B. durch einen Tierarzt oder Helfer, erreicht werden soll. Dabei ist eine der den Käfig begrenzenden Seitenwände schwenkbar ausgebildet, mit einer Fußwand-Baugruppe ist für den Helfer auch ein aufwendiger Eingang vorgesehen und diese Konstruktion ist nur zum Ruhigstellen der Tiere konzipiert. In G 84 14 897.4 und ähnlichen Vorschlägen (US 5,111,769; US 5,293,834; US 6,382,135; G' 92 04 397) ist ein Sauenkäfig vorgeschlagen, der für eine geringe Veränderung seiner Aufnahmebreite jeweilige verschwenkbare Seitenwände aufweist, so daß mit deren Verlagerung eine Anpassung an die Größe bzw. Breite des jeweiligen Muttertieres vor dem Abferkeln möglich ist und bei einer Stallbox gemäß G 80 02 333 ist diese nur durch eine Scharnierkonstruktion an der Rückwand in der Länge verstellbar ausgebildet.

Die Erfindung befaßt sich mit dem Problem, eine Abferkelbucht mit einem Sauenkäfig zu schaffen, der mit geringem technischen Aufwand für Muttertiere einen weitläufigeren und einfach zugänglichen Innenraum bereitstellt, wobei der Sauenkäfig als integraler Teil der Abferkelbucht nach der Abferkelphase eine schnelle Anpassung an eine optimale Fütterung, den Schutz der Ferkel und hinreichenden Freilauf der Muttertiere ermöglicht.

Ausgehend von einer Abferkelbucht mit einem Sauenkäfig gemäß dem Oberbegriff des Anspruchs 1 löst die Erfindung diese Aufgabe mit den Merkmalen des kennzeichnenden Teils des Anspruchs 1. Hinsichtlich wesentlicher weiterer Ausgestaltungen wird auf die Ansprüche 2 bis 16 verwiesen.

Die Abferkelbucht ist erfindungsgemäße mit einem Sauenkäfig ausgerüstet, dessen durch Haltungsrichtlinien vorgegebene Liege-Abmessungen mit geringem Aufwand eine nutzerspezifisch weitgehend variable Gestaltung erfahren können und dabei insbesondere eine Erweiterung der im Käfig vorhandenen Bewegungszone vorgesehen ist. Die Käfigkonstruktion ist im Bereich der Seitenwände und der rückseitigen Querwandteile so ausgeführt, daß bei Verlagerung zumindest einer der Seitenwände das gesamte Bauteil-System in einer einen erweiterten Bewegungsraum bildenden Spreizstellung fixierbar ist. Damit wird nach Verschluß der rückseitigen Querwandteile für das tragende Muttertier eine erweiterte Freizone gebildet, in der das Tier Umlauf-Bewegungen ausführen kann. Als Verschluß der rückseitigen Einlaßöffnung ist zweckmäßig ein in seinen Längenabmessungen variabel ausführbares Zwischenteil vorgesehen, so daß entsprechend dem Schwenkwinkel zumindest einer der in Spreizstellung befindlichen Seitenwände eine große Einlaßöffnung gebildet wird und diese nach Aufnahme des Muttertiers im Käfig mit dem Zwischenteil einfach verschließbar ist. Mit diesem erweiterbaren Sauenkäfig ist eine Basisbaueinheit geschaffen, die innerhalb der umgebenden Abferkelbucht in jeder Funktionslage einen für die Ferkel vor Erdrückung geschützten Bewegungsraum beläßt und damit eine optimale Tierhaltung nach Art eines Freilauf-Systems gewährleistet.

Die verschwenkbaren Seitenwände können einzeln oder gleichzeitig in die Spreizstellung verlagert und durch das Zwischenteil verbunden werden, so daß sich auf der damit geschaffenen Fläche das tragende Muttertier bereits vor der Abferkelphase innerhalb des erweiterten Bewegungsraumes drehen kann und damit das Tier nur eine geringe, die Streßbelastungen senkende Bewegungseinschränkung erfährt. Vor Beginn des Abferkelvorgangs können die rückseitigen Zwischenteile des Käfigs entfernt und/oder verschwenkt werden. Danach ist eine Rückschwenkung der Seitenwände in die im wesentlichen parallele Ausgangsstellung möglich, das Muttertier wird damit in eine junge Ferkel weniger gefährdende Zwangslage gebracht und auf der Standard-Liegefläche gehalten.

In einer weiteren Ausführung dieses variabel ausführbaren Freilauf-Systems mit Bucht und Käfig ist in der Abferkelbucht ein in seinen Längenabmessungen variabel ausführbares Wandteil vorgesehen, das als Verschluß der rückseitigen Einlaßöffnung sowohl mit den Teilen des Käfigs als auch mit einer der Trennwände der Bucht zusammenwirkt. Die entsprechend dem Schwenkwinkel der in Spreizstellung befindlichen Seitenwand des Käfigs gebildete Einlaßöffnung wird mit dem Wandteil einfach dadurch verschließbar, daß dieses an das Ende der Seitenwand herangeführt und mit dieser in der Schließstellung verbunden wird.

Weitere Einzelheiten und Vorteile der Erfindung ergeben sich aus der nachfolgenden Beschreibung und der Zeichnung, die mehrere Ausführungsbeispiele der erfindungsgemäßen Abferkelbucht mit Sauenkäfig schematisch veranschaulicht. In der Zeichnung zeigen:
- Fig. 1: eine Draufsicht auf zwei benachbarte Abferkelbuchten mit einem jeweiligen Sauenkäfig in Schließstellung mit rückseitigen Zwischenteilen,
- Fig. 2: eine Draufsicht ähnlich Fig. 1 mit jeweiligen von den Seitenwänden der Sauenkäfige vorgesehenen Zwischenteilen in einer Öffnungsphase,
- Fig. 3: eine Draufsicht ähnlich Fig. 1 mit Sauenkäfigen bekannter Ausführung ohne bzw. nach Entfernung der rückseitigen Zwischenteile,
- Fig. 4: eine Draufsicht ähnlich Fig. 1 mit zusätzlichen Anbauteilen im Bereich der Seitenwände,
- Fig. 5: eine Draufsicht ähnlich Fig. 4 mit drei Zwischenteilen im Bereich der Seitenwände,
- Fig. 6: eine Draufsicht auf eine Abferkelbucht mit einem Sauenkäfig in Schließstellung ähnlich Fig. 3 mit einem Wandteil,
- Fig. 7: eine Draufsicht ähnlich Fig. 6 mit in Öffnungsstellung verlagerten Seitenwänden und einem zusätzlichen Wandteil, das den erweiterten Innenraum des Käfigs schließt,
- Fig. 8: eine Draufsicht mehrerer Abferkelbuchten mit verschiedenen Anordnungen der Käfige in einer Stallanlage, und
- Fig. 9: eine Draufsicht ähnlich Fig. 8 mit veränderter Einbaulage des schwenkbaren Wandteils.

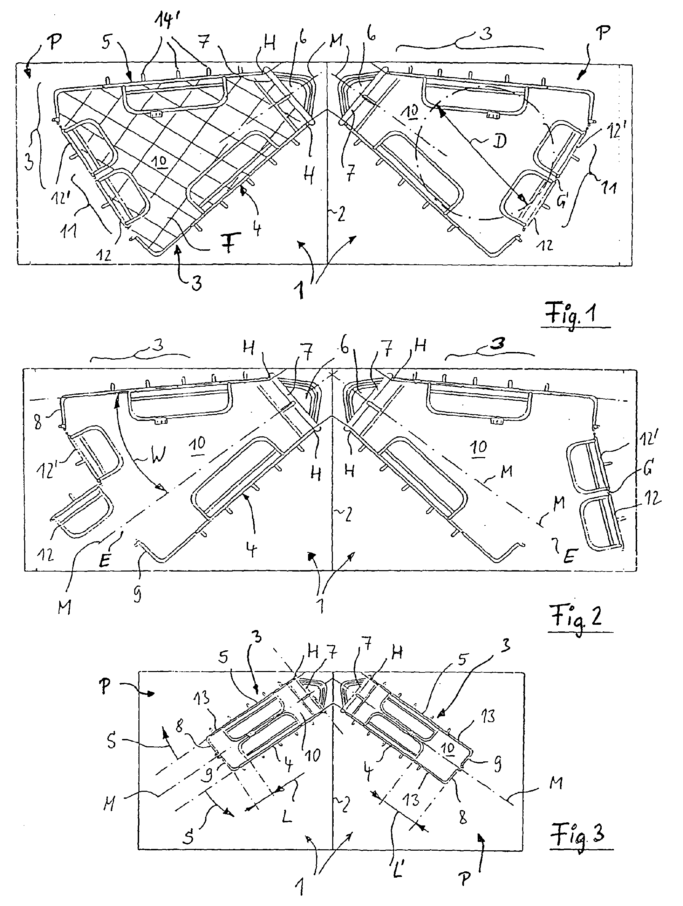

In Fig. 1 sind zwei jeweils mit 1 bezeichnete und im Bereich einer Trennwand 2 zusammenwirkende Abferkelbuchten dargestellt, in denen jeweils ein Sauenkäfig 3 vorgesehen ist. Der Sauenkäfig 3 weist dabei zwei gitterartig aufgebaute Seitenwände 4 und 5 an sich bekannter Bauart auf, wobei einerseits am jeweiligen vorderseitigen Ende der Seitenwand 4, 5 ein Futtertrog 6 vorgesehen ist, in dessen Bereich sich ein Stützrahmen 7 erstreckt. An diesem Stützrahmen 7 sind die Seitenwände 4, 5 gehalten. Andererseits sind die hinteren Enden der Seitenwände 4, 5 mit jeweiligen Querwandteilen 8, 9 (Fig. 3) zu sehen, mit denen der Sauenkäfig 3 verschließbar ist. Die in Fig. 3 dargestellten beiden Sauenkäfige 3 weisen eine an sich bekannte Grundgestalt auf, wobei in der dargestellten Gebrauchsstellung ein der Tiergröße angepaßter Innenraum 10 mit im wesentlichen rechteckiger Grundfläche durch die Seitenwände 4 und 5 begrenzt ist.

Bei dem Sauenkäfig 3 ist zumindest eine der Querseitenwände 4, 5 im Bereich des Stützrahmens 7 um eine vertikale Hochachse H schwenkbar abgestützt, so daß damit die Verlagerung der Seitenwand 4 bzw. 5 in eine nach außen gerichtete Spreizstellung (Pfeil S, Fig. 3) möglich ist und in dieser die Bauteile fixierbar sind. Das erfindungsgemäße System von Käfig 3 und Bucht 1 ist so aufgebaut, daß der Innenraum 10 nach Erreichen dieser Spreizstellung einer der Seitenwände 4, 5 insgesamt einen mit F, F' bezeichneten Bewegungsraum bildet, der rückseitig im Bereich der Querwandteile 8, 9 mit einem zusätzlichen Verschluß 11, 11' versehen wird. Mit dieser Querwandteil-Verschluß-Einheit wird ein variabel ausführbares Bucht-Käfig-System geschaffen, in dem eine verbesserte Tierhaltung möglich ist, derart, daß für die Muttertiere und die Ferkel in geschützten Freiräumen ein optimaler Freilauf erreicht wird.

Für die Bildung des Verschlusses 11 ist denkbar, zumindest eines der Querwandteile 8, 9 mit einem in der Einlaß- bzw. Öffnungsebene verlagerbaren Auszugteil (nicht dargestellt) zu versehen, so daß die Einlaßöffnung E (Fig. 2) in der dargestellten Spreizstellung verschließbar ist und die Seitenwände 4, 5 fixiert sind.

Bei der dargestellten Ausführung des Sauenkäfigs 3 ist dieser im Bereich zwischen den zwei hinteren Querwandteilen 8, 9 mit zumindest einem diese verbindenden Zwischenteil 12 in Form einer als Gitterelement ausgebildeten Baugruppe versehen, die den Verschluß 11 bildet.

In Fig. 1 (linke Seite) ist die durch Spreizstellung gebildete Erweiterung F des Innenraums 10 dadurch erreicht, daß zumindest eine der Wände, nämlich die Seitenwand 5, um einen Spreizwinkel W bezüglich einer Längsmittelebene M verschwenkt ist. Da in vorteilhafter Ausführung beide Seitenwände 4, 5 im Bereich ihrer jeweiligen Hochachse H schwenkbar sind, können ausgehend von der in Fig. 3 dargestellten Schließstellung wahlweise einzelne oder gemeinsame Spreizstellungen erreicht werden.

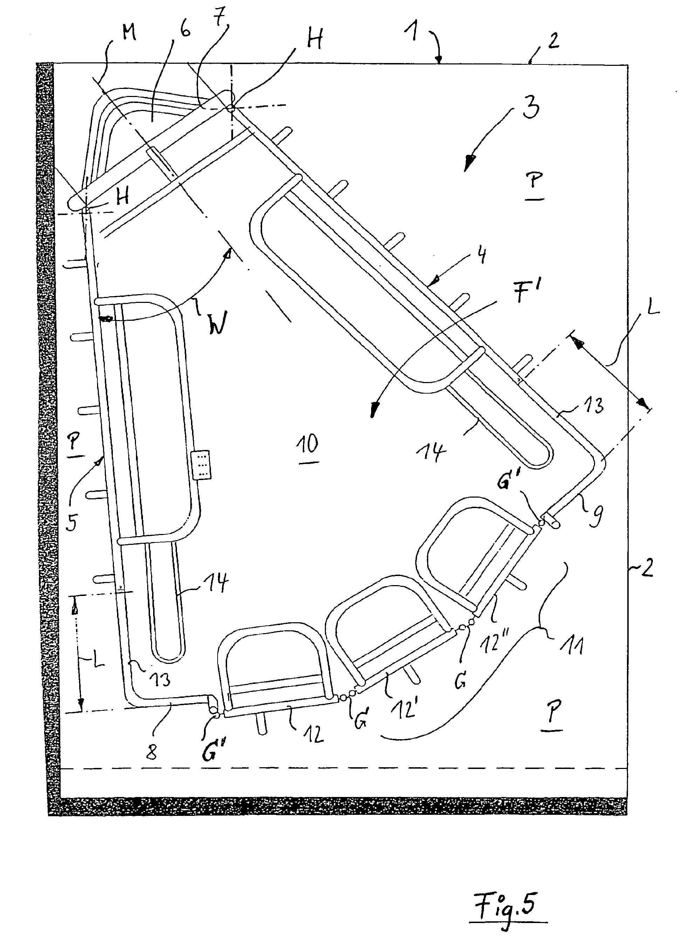

In der Spreizstellung weist der Innenraum 10 damit einen Bewegungsraum F (Fig. 1, schraffierte Fläche) mit einer im wesentlichen trapezförmigen Grundfläche auf, die eine Kreisfläche mit einem Innendurchmesser D so einschließt, daß in dem Sauenkäfig 3 das Tier umlaufen bzw. wenden kann (Fig. 1, rechte Seite). In den dargestellten Ausführungsformen gemäß Fig. 1, 2 und 4, 5 sind im Bereich des rückseitigen Verschlusses 11 jeweils mehrere Zwischenteile 12, 12', 12" vorgesehen, womit die variable Gestaltung derartiger Sauenkäfige 3 deutlich wird. In Fig. 2 sind die Zwischenteile 12 und 12' in unterschiedlichen Klappstellungen dargestellt, in denen die Einlaßöffnung E wahlweise für Tiere oder Menschen freigegeben werden kann. Die Zwischenteile 12, 12', 12" sind dabei über jeweilige Gelenke G bzw. Schließteile miteinander verbunden bzw. sind Gelenke G' zur Verbindung mit der Seitenwand 4 bzw. 5 oder dem Querwandteil 8, 9 vorgesehen (Fig. 5).

In der Fig. 3 ist der Sauenkäfig 3 jeweils ohne Zwischenteile dargestellt, da diese in der dargestellten Gebrauchsstellung abgenommen sind. Für eine vorgesehene Erweiterung des Innenraumes 10 zur Bildung der Bewegungsfläche F können die Seitenwände 4, 5 entsprechend der Pfeilrichtung S geschwenkt werden und danach ist mit geringem Aufwand die Festlegung eine beliebigen Zahl von Zwischenteilen 12, 12', 12" zum Verschluß der Einlaßöffnung E möglich. Zusätzlich sind die Sauenkäfige 3 durch teleskopierbare Endteile 13 die in ihrer Länge entsprechend einem Maß L, L' variabel an eine Vergrößerung der Abferkelbucht 3 in Längsrichtung anpaßbar.

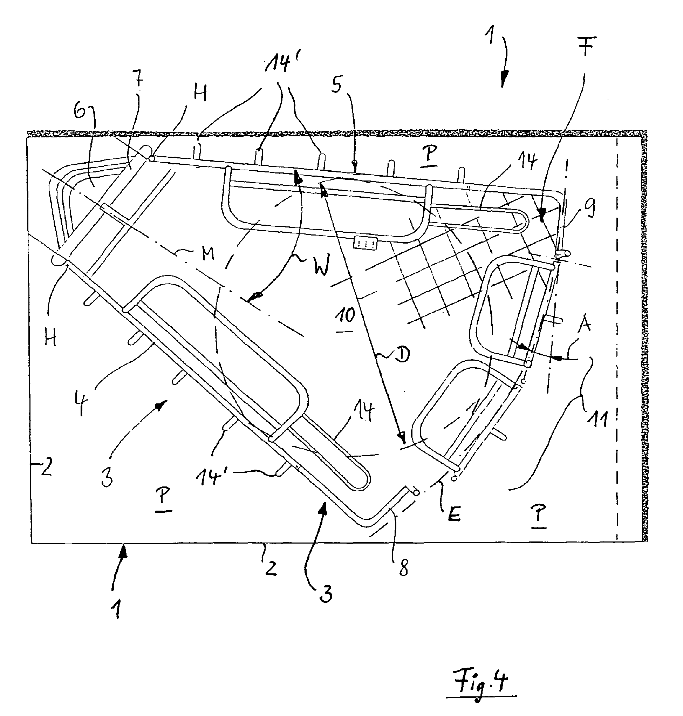

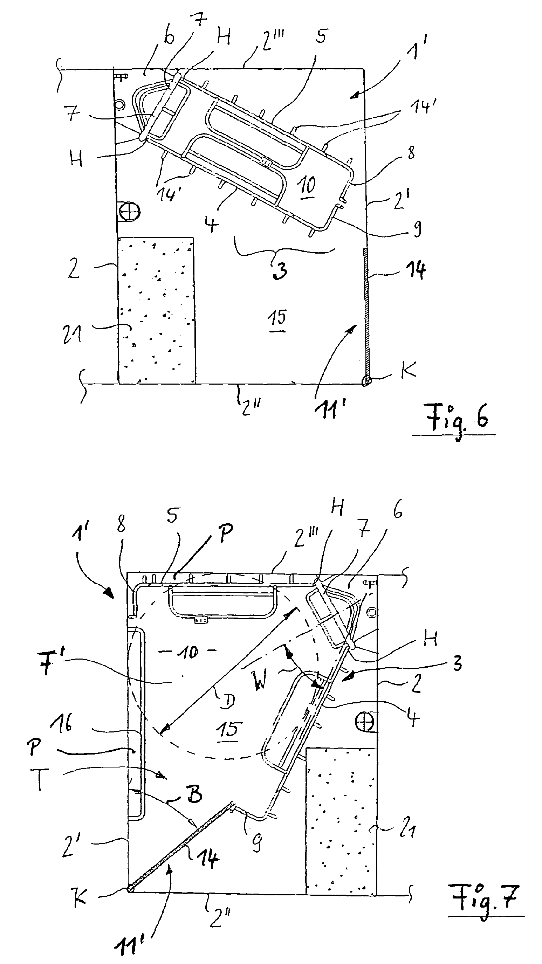

In der Ausführung gemäß Fig. 4 sind zusätzlich zu den beiden Zwischenteilen 12 und 12', die in ihrer Einbaulage durch spitzwinklige Ausrichtung in einem Winkel A einen Bogen bilden, jeweilige Anbauteile 14 vorgesehen, so daß in diesem Bereich ein Aufsteigen des Tieres auf die Seitenwände 4 bzw. 5 vermieden wird. An den Außenseiten der Wände 4, 5 bzw. der Trennwand 2' sind jeweilige Abweiser 14', 16 (Fig. 7) vorgesehen, so daß in jeder Funktionslage des Bucht-Käfig-Systems (Fig. 1, Fig. 4, Fig. 7) ein die Ferkel geschützt aufnehmender Bewegungsraum P definiert ist.

Die Abferkelbucht 1' in den weiteren Ausführungsformen gemäß Fig. 6 bis Fig. 9 weist im Bereich einer ihrer Trennwände 2, 2', 2", 2"' bzw. im Bereich des Käfigbodens bei 15 (Fig. 6) eine insgesamt als Verschluß 11' bezeichnete Baugruppe auf, die wahlweise klappbar und/oder schwenkbar ist und mit den Bauteilen des Sauenkäfigs 3 funktional entsprechend der vorbeschriebenen Bewegungsraum-Gestaltung zusammenwirkt.

In der dargestellten Ausführungsform gemäß Fig. 6 ist dieser Verschluß 11' von einem zusätzlichen Wandteil 14 gebildet, das im Bereich der Trennwand 2' und/oder 2" vorgesehen ist und dabei unabhängig von den Seitenwänden 4, 5 des Käfigs 3 verlagert werden kann. In der Darstellung gemäß Fig. 7 ist die Seitenwand 4 des Käfigs 3 in eine Spreizstellung W geschwenkt, so daß der hintere Querwandteil 9 der Seitenwand 4 mit dem Wandteil 14 verbindbar ist und damit ein Teilbereich T eines erweiterten Bewegungsraumes F' begrenzt wird.

Für diese Verlagerung des Wandteiles 14 aus seiner Nichtgebrauchsstellung (Fig. 6) in die Schließstellung (Fig. 7) ist das Wandteil 14 um eine vertikale Hochachse K schwenkbar vorzugsweise im Eckbereich zwischen den Trennwänden 2' und 2" abgestützt (Pfeil B). In zweckmäßiger Ausführung ist das Wandteil 14 als eine einstückige Baugruppe vorgesehen, wobei auch denkbar ist, den Wandteil 14 aus mehreren gelenkig verbundenen Teilen zu bilden (nicht dargestellt). Zusätzlich zu dem schwenkbaren Wandteil 14 ist in dem Teilbereich T der Bucht 1' der als Ferkelabweiser vorgesehene Bügelteil 16 an der Trennwand 2 festgelegt.

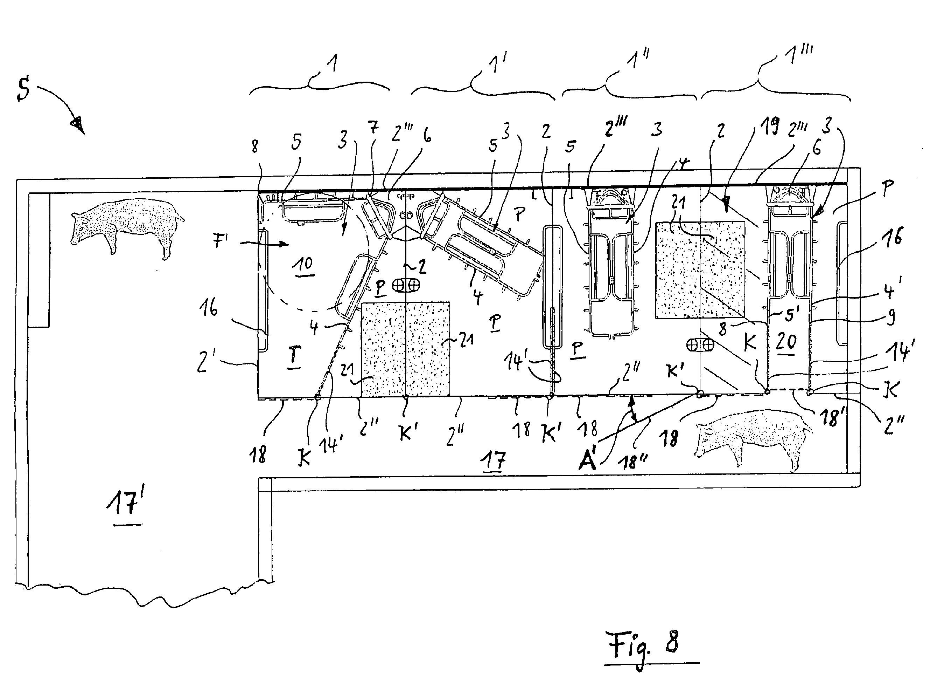

In Fig. 8 ist in einer teilweise geschnittenen Draufsicht eine Stallanlage S dargestellt, die eine Reihenanordnung von mehreren Abferkelbuchten 1', 1 ", 1"' erfindungsgemäßer Ausführung aufweist. Die im linken Teil der Darstellung gezeigten beiden Buchten 1 und 1' entsprechen im wesentlichen den Darstellungen gemäß Fig. 6 und 7, wobei der Wandteil 14' im Bereich der zu einem Laufgang 17 gerichteten Trennwand 2" eine aus dem Eckbereich (Fig. 7) in die vordere Türebene versetzte Hochachse K zur Abstützung des Wandteiles 14' aufweist.

Die im Bereich der Trennwand 2 bzw. 2' mit einer Höhe von 1,10 m gefertigten Buchten 1', 1 ", 1"' sind bei dem erfindungsgemäßen Freilauf-System in einem mit einer unterbrochenen Linie dargestellten Bereich der vorderen Trennwand 2" mit einer Übertrittwand 18 versehen, die lediglich ca. 0,30 bis 0,40 m hoch ist. Damit ist zusätzlich zu dem vergrößerten Innenraum 10 bzw. Bereich T eine Erweiterung des Bewegungsraumes für die Tiere dadurch ermöglicht, daß das Muttertier aus der Bucht 1' (bzw. 1 ", 1"') in den Laufgang 17 austreten kann. Die in der Reihenanordnung vorgesehenen Zwischenwände 2 bzw. 2' weisen eine Höhe von ca. 0,40 bis 0,60 m, vorzugsweise 0,52 m, auf.

Diese Übertrittwand 18 besteht dabei insbesondere aus einem elastischen Material bzw. aus Verletzungsgefahren vermeidendem Kunststoff. Mit dieser optimalen Höhen-Ausbildung der jeweiligen Wände sind in der Bucht 1' befindliche Ferkel einerseits zum Verbleib im erweiterten Innenraum 10 bzw. in den Schutzzonen P gezwungen und andererseits können Muttertiere die Abferkelbuchten 1', 1", 1"' weitgehend ungehindert verlassen. Beim ökologischen Landbau, der vorzugsweise eine Strohhaltung der Tiere betreibt, ist damit gewährleistet, daß die Tiere zum Abmisten oder Fressen die Abferkelbucht 1', 1 ", 1"' verlassen können, damit ein artgerecht großer Bewegungsfreiraum verfügbar ist (Bereich 17' der Stallanlage S) und die Tiere jederzeit ungehindert zu der die Ferkel enthaltenden Bucht 1', 1 ", 1"' zurückkehren können.

Für diese freie Benutzung des Laufganges 17, 17' ist in sämtlichen der nebengeordneten Abferkelbuchten 1', 1" bzw. 1"' eine entsprechende Wand-Konstruktion mit einer Übertrittwand 18 (jeweils dargestellt mit einer unterbrochenen Linie) denkbar, so daß kundenspezifisch unterschiedliche Ausführungen von Abferkelbuchten 1', 1", 1"' bereitstellbar sind und im ökologischen Landbau auch die Strohhaltung von Tieren mit geringem Aufwand möglich ist.

Die Ausführung der Abferkelbucht 1" gemäß Fig. 8 ist so konzipiert, daß der parallel zu den Trennwänden 2, 2' ausgerichtete Sauenkäfig 3 durch eine um eine Hochachse K' klappbare Vordertür 18" an sich bekannter Art im Bereich der zum Laufgang 17 gerichteten Trennwand 2" zugänglich ist (Pfeil A').

Die Ausführung der Abferkelbucht 1"' gemäß der Darstellung ist ähnlich der Ausführung gemäß 1 ", wobei hier durch die senkrecht zur Rückwand 2"' verlaufende Anordnung des Sauenkäfigs 3 neben diesem ein zusätzlicher Bewegungsraum 19 (schrägschraffierter Bereich) geschaffen ist. In diesem die Heizmatte 21 aufweisenden Bereich 19 ist neben den Ferkeln auch das Muttertier aufnehmbar, wobei diese die Übertrittwand 18 überwinden muß. Dieser Bewegungsraum 19 kann ggf. noch durch bewegliche und/oder starre Abweiser (ähnlich Bügelteil 16) zusätzlich so ausgestattet werden, daß sich das Muttertier in diesem Bereich 19 nicht hinlegen kann und damit ein zuverlässiger Schutz für die freibeweglichen Ferkel erreicht ist.

Die Abferkelbucht gemäß der Ausführung 1"' weist mit der zentralen Einbaulage des Käfigs 3 und den zugeordneten schwenkbaren Wandteilen 14' einen Führungsgang 20 auf, der am Ausgang des Sauenkäfigs 3 in diesen einmündet, wobei die hinteren Querwandteile 8, 9 entfernt oder geöffnet sind. Im Bereich dieses Führungsganges 20 sind die beiden als Verschluß vorgesehenen Wandteile 14' parallel ausgerichtet. Für den Verschluß dieser Abferkelbucht 1"' kann der Führungsgang 20 ebenfalls mit einer ca. 0,30 bis 0,40 m hohen Übertrittwand 18' versehen werden. Damit sind die Ferkel in dieser Bucht 1"' in mehreren Bereichen sicher gehalten und für das Muttertier sind sowohl der Futtertrog 6 als auch der hinreichend große Bewegungsraum bei 17, 17' in der Anlage S erreichbar.

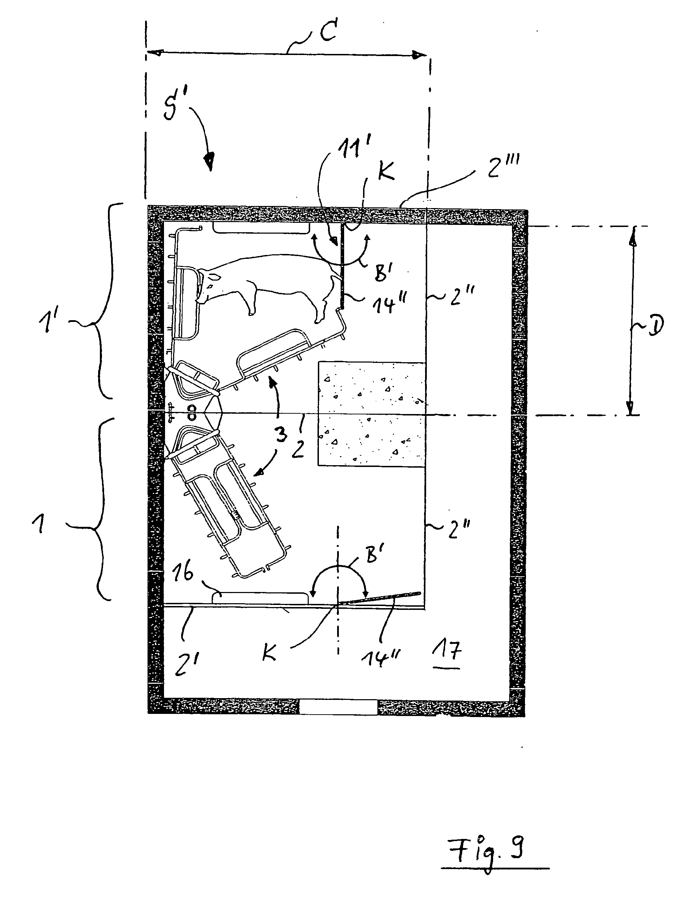

In Fig. 9 ist eine Stallanlage S" mit zwei Buchten 1, 1' dargestellt, die im Bereich der Wände 2" jeweils eine Höhe von 0,52 m aufweisen, wobei die Wandteile 14" als Verschluß 11' so angeordnet sind, daß die Hochachse K im Bereich einer Längsseitenwand der Abferkelbucht 1 bzw. der Anlage S' verläuft und eine Klappbewegung B' möglich ist. Die vordere Gitter-Wand 2' weist dabei eine Höhe von ca. 1,10 m auf und die Abferkelbuchten 1, 1' sind mit einer Länge C von ca. 2,50 m bzw. einer Breite D von ca. 2,20 m bemessen, so daß mit dem Käfig-Verschluß-Aufbau die vorbeschriebene Erweiterung des Bewegungsraumes erreicht wird.

Das vorbeschriebene System verschiedener Abferkelbuchten 1, 1', 1 ", 1"' besteht insgesamt aus austauschbaren und kundenspezifisch anpaßbaren Baueinheiten, so daß in unterschiedlichen Stallanlagen S, S' eine optimale und den Haltungsrichtlinien entsprechende Freilauf-Gestaltung für Muttertiere im Bereich von Abferkelbuchten erreicht wird. Denkbar ist dabei auch, daß die Baugruppen im Bereich der Trennwände 2, 2', 2", der jeweiligen Wandteile 14, 14', der Übertrittwände 18, 18', der Käfigwände 8, 9; 4, 5 und/oder der Vordertüren 18" (bei A') mit automatisch wirksamen Bedienelementen (z. B. steuerbaren Druckzylindern) versehen sind und damit die jeweilige Nutzungsphase der Abferkelbuchten 1, 1', 1 ", 1"' zur Festsetzung oder Freigabe der Muttertiere automatisch steuerbar ist.

## Patentansprüche

1. Abferkelbucht mit einem Sauenkäfig (3), der zwei gitterartig aufgebaute Seitenwände (4, 5) aufweist, die in Schließstellung einen der Tiergröße entsprechenden Innenraum (10) des Käfigs (3) seitlich begrenzen, wobei einerseits jeweilige vorderseitige Enden der Seitenwände (4, 5) im Bereich eines Futtertroges (6) an einem Stützrahmen (7) abgestützt und andererseits an den hinteren Enden jeweilige in Gebrauchsstellung den Innenraum (10) rückseitig verschließende Querwandteile (8, 9) vorgesehen sind, wobei zumindest eine der Seitenwände (4, 5) im Bereich des Stützrahmens (7) um eine vertikale Hochachse (H) schwenkbar abgestützt, rückseitig mit zumindest einem zusätzlichen Verschluß (11, 11') versehen und damit der Bewegungsraum im Käfig (3) erweiterbar ist, **dadurch gekennzeichnet, daß** der rückseitige Verschluß (11, 11') in Form eines beweglichen Wandteiles (12, 12', 12", 14, 14') ausgebildet ist und dieses mit zumindest einer der Seitenwände (4, 5) bzw. deren rückseitigem Querwandteil (8, 9) als ein funktionales Zwischenteil zusammenwirkt, derart, daß in der Abferkelbucht (1, 1', 1 ", 1"') ein für Umlauf-Bewegungen des Tieres erweiterter Bewegungsfreiraum (F, F') abgrenzbar ist.

2. Abferkelbucht nach Anspruch 1, **dadurch gekennzeichnet, daß** der Sauenkäfig (3) im Bereich zwischen den zwei hinteren Querwandteilen (8, 9) zumindest zwei diese verbindende Wand-Zwischenteile (12, 12', 12") als Verschluß (11) aufweist.

3. Abferkelbucht nach Anspruch 1 oder 2, **dadurch gekennzeichnet, daß** beide Seitenwände (4, 5) des Sauenkäfigs (3) im Bereich einer jeweiligen Hochachse (H) schwenkbar sind, derart, daß die Seitenwände (4, 5) wahlweise einzeln oder gemeinsam in eine Spreizstellung (W) verlagerbar und durch den rückseitigen Wandteil als Verschluß (11; 11') fixierbar sind.

4. Abferkelbucht nach einem der Ansprüche 1 bis 3, **dadurch gekennzeichnet, daß** der in Spreizstellung (W) der Seitenwände (4, 5) gebildete Bewegungsraum (F) mit dem rückseitigen Wandteil als Verschluß (11,11') eine im wesentlichen trapezformige Grundfläche definiert und diese einen ein Umlaufen des Tieres im Käfig (3) ermöglichendenden Innendurchmesser (D) einschließt.

5. Abferkelbucht nach einem der Ansprüche 1 oder 4, **dadurch gekennzeichnet, daß** im Bereich des rückseitigen Verschlusses (11) mehrere Wände als Zwischenteile (12,12', 12") vorgesehen sind.

6. Abferkelbucht nach einem der Ansprüche 1 bis 5, **dadurch gekennzeichnet, daß** die Wand-Zwischenteile (12, 12', 12") über jeweilige Gelenkverbindungen (G) miteinander, direkt an den Enden der Seitenwände (4, 5) und/oder den Querwandteilen (8, 9) gehalten sind.

7. Abferkelbucht nach einem der Ansprüche 1 bis 6, **dadurch gekennzeichnet, daß** zumindest eines der Querwandteile (8, 9) anstelle des Zwischenteils (12, 12', 12") oder zusätzlich zu diesem mit einem in der Ebene der Einlaßöffnung (E) verlagerbaren und diese in Spreizstellung (W) verschließenden Auszugteil versehen ist.

8. Abferkelbucht nach einem der Ansprüche 1 bis 7, **dadurch gekennzeichnet, daß** der Sauenkäfig (3) in sämtlichen Funktionslagen einen äußeren Bewegungsraum (P) definiert, in dem Ferkel geschützt aufnehmbar sind.

9. Abferkelbucht nach einem der Ansprüche 1 bis 8, **dadurch gekennzeichnet, daß** die Abferkelbucht (1', 1 ", 1"') im Bereich einer ihrer Trennwände (2, 2', 2", 2"') den als Verschluß (11') wirksamen Wandteil (14, 14', 14") aufweist und dieser unabhängig von den Seitenwänden (4, 5) des Käfigs (3) in die Gebrauchsstellung verbringbar ist.

10. Abferkelbucht nach Anspruch 9, **dadurch gekennzeichnet, daß** der als Verschluß (11') vorgesehene Wandteil (14, 14', 14") aus seiner Nichtgebrauchsstellung in die Schließstellung schwenkbar ist.

11. Abferkelbucht nach Anspruch 9 oder 10, **dadurch gekennzeichnet, daß** der Wandteil (14, 14', 14") aus einer bodenparallelen Stellung in die Schließstellung hochschwenkbar ist.

12. Abferkelbucht nach einem der Ansprüche 9 bis 11, **dadurch gekennzeichnet, daß** der Wandteil (14, 14', 14") aus einer zur Trennwand (2', 2", 2'") parallelen Stellung zum Innenraum (10) der Bucht (1, 1', 1", 1"') hin um eine vertikale Hochachse (K) schwenkbar ist.

13. Abferkelbucht nach einem der Ansprüche 9 bis 12, **dadurch gekennzeichnet, daß** der Wandteil (14) aus mehreren gelenkig verbundenen und/oder teleskopierbaren Teilen besteht.

14. Abferkelbucht nach einem der Ansprüche 9 bis 13, **dadurch gekennzeichnet, daß** in dem vorn Wandteil (14, 14', 14") begrenzten Teilbereich (T, P) der Bucht (1) ein als Ferkelabweiser vorgesehener Bügelteil (16) an einer der Trennwände (2') vorgesehen ist.

15. Abferkelbucht nach einem der Ansprüche 9 bis 14, **dadurch gekennzeichnet, daß** der Sauenkäfig (3) im Bereich seiner Seitenwände (4, 5) mit mehreren Wandteilen (14') zusammenwirkt.

16. Abferkelbucht nach einem der Ansprüche 1 bis 15, **dadurch gekennzeichnet, daß** die Abferkelbucht (1, 1', 1", 1"') im Bereich zumindest einer der Seitenwände (2, 2', 2") als eine für das Muttertier überwindbare Übertrittwand (18, 18') ausgebildet ist, derart, daß in einer Stallanlage (S, S') ein Freiraum (17, 17') zugänglich ist.

## Claims

1. Farrowing pen having a sow cage (3) which has two side-walls (4, 5) of grille-like construction which, in the closed position, form lateral boundaries of an interior space (10) within the cage (3) which corresponds in size to the animal, with, on the one hand, front ends of the each of the side-walls (4, 5) being supported on a supporting frame (7) in the region of a feeding trough (6) and, on the other hand, there being provided at the rear ends respective transverse wall-parts (8, 9) which close off the interior space (10), at the rear, in the in-use position, with at least one of the side-walls (4, 5) being supported in the region of the supporting frame (7) in such a way as to be pivotable on a vertical heightwise axis (H) and being provided at the rear with at least one additional closure (11, 11'), and the space for movement in the cage (3) thus being able to be enlarged, **characterised in that** the closure (11, 11') at the rear takes the form of a movable wall-part (12, 12', 12", 14, 14') and this latter co-operates with at least one of the side-walls (4, 5), or its part (8, 9) at the rear which acts as a functional intermediate component, in such a way that a free space for movement (F, F') which is enlarged for movements round of the animal can be defined in the farrowing pen (1, 1', 1", 1 "').

2. Farrowing pen according to claim 1, **characterised in that**, in the region between the two rear transverse wall-parts (8, 9), the sow cage (3) has, as a closure (11), at least two intermediate wall-parts (12, 12', 12") which connect the said two rear transverse wall-parts (8, 9).

3. Farrowing pen according to claim 1 or 2, **characterised in that** the two side-walls (4, 5) of the sow cage (3) are pivotable in the region of respective vertical heightwise axes (H) in such a way that the side-walls (4, 5) can, if desired, be displaced, either individually or together, to a splayed position (W) and can be fixed in place by the rear wall-part which acts as a closure (11, 11').

4. Farrowing pen according to one of claims 1 to 3, **characterised in that** the space for movement (F) which is created when the side-walls (4, 5) are in the splayed position, together with the rear wall-part acting as a closure (11, 11'), defines a substantially trapezoidal area of ground, and this area of ground encloses an inside diameter (D) which allows the animal to move round in the cage (3).

5. Farrowing pen according to either of claims 1 and 4, **characterised in that** a plurality of walls are provided as intermediate parts (12, 12', 12") in the region of the rear closure (11).

6. Farrowing pen according to one of claims 1 to 5, **characterised in that** the intermediate wall-parts (12, 12', 12") are held together by means of respective hinging joints (G), directly at the ends of the side-walls (4, 5) and/or at the transverse wall-parts (8, 9).

7. Farrowing pen according to one of claims 1 to 6, **characterised in that** at least one of the transverse wall-parts (8, 9) is provided, in place of the intermediate part (12,12', 12") or in addition thereto, with a withdrawable part which can be displaced in the plane of the entry opening (E) or which closes off this latter in the splayed position (W).

8. Farrowing pen according to one of claims 1 to 7, **characterised in that** in all its functional positions the sow cage (3) defines an outer space for movement (P) in which piglets can be accommodated while being protected.

9. Farrowing pen according to one of claims 1 to 8, **characterised in that** the farrowing pen (1'. 1 ", 1 "') has the wall-part (14, 14', 14") which acts as a closure (11') in the region of one of its dividing walls (2, 2', 2", 2"'), and the said wall-part (14, 14', 14") can be moved to the in-use position independently of the side-walls (4, 5) of the cage (3).

10. Farrowing pen according to claim 9, **characterised in that** the wall-part (14, 14', 14") which is intended as a closure (11') can be pivoted from its out-of-use position to the closed position.

11. Farrowing pen according to claim 9 or 10, **characterised in that** the wall-part (14, 14', 14") can be pivoted up to the closed position from a position parallel to the ground.

12. Farrowing pen according to one of claims 9 to 11, **characterised in that** the wall-part (14, 14', 14") can be pivoted on a vertical heightwise axis (K) from a position parallel to the dividing wall (2', 2", 2"') towards the space (10) within the pen (1, 1', 1", 1''').

13. Farrowing pen according to one of claims 9 to 12, **characterised in that** the wall-part (14) comprises a plurality of parts which are hinged together and/or can be telescoped.

14. Farrowing pen according to one of claims 9 to 13, **characterised in that**, in the sub-region (T, P) of the pen (1) which is bounded by the wall-part (14, 14', 14"), a part (16) in arched-out form which is intended as a piglet deflector is provided on one (2') of the dividing walls.

15. Farrowing pen according to one of claims 9 to 14, **characterised in that** the sow cage (3) co-operates with a plurality of wall-parts (14') in the region of its side-walls (4, 5).

16. Farrowing pen according to one of claims 1 to 15, **characterised in that**, in the region of at least one of the side-walls (2, 2', 2"), the farrowing pen (1,1', 1", 1"') takes the form of a step-over wall (18, 18') which the mother pig can cross, in such a way that access can be gained to a clear space (17, 17') in a housing facility (S, S').

## Revendications

1. Installation pour la mise-bas comportant une cage pour la truie (3) qui présente deux parois latérales conçues comme un grillage (4, 5) qui limitent latéralement, en position fermée, un espace intérieur (10) de la cage (3) correspondant à la taille de l'animal, dans laquelle d'une part les extrémités avant respectives des parois latérales (4, 5) s'appuient dans la zone d'une mangeoire (6) sur un cadre d'appui (7) et d'autre part, aux extrémités arrière sont prévues respectivement en position d'utilisation de l'espace intérieur (10), des parties de paroi transversale (8, 9) se fermant à l'arrière, au moins l'une des parois latérales (4; 5) s'appuyant, dans la zone du cadre d'appui (7) autour d'un axe vertical (H) de façon à pivoter, dotée à l'arrière d'au moins un verrou supplémentaire (11, 11') et ainsi l'espace de mouvement dans la cage (3) peut s'agrandir, **caractérisée en ce que** le verrou arrière (11, 11') est conçu sous la forme d'une partie de paroi mobile (12, 12', 12", 14, 14') et celle-ci coopère avec au moins l'une des parois latérales (4, 5) ou la partie de paroi transversale arrière (8, 9) en tant que partie intermédiaire fonctionnelle, de telle sorte que dans l'installation de mise-bas (1, 1', 1", 1"'), un espace libre élargi pour les mouvements (F, F') peut être délimité pour les mouvements de retournement de l'animal.

2. Installation pour la mise-bas selon la revendication 1, **caractérisée en ce que** la cage pour la truie (3) présente, dans la zone entre les deux parties de paroi transversale (8, 9) au moins deux de ces parois intermédiaires de raccordement (12, 12', 12") en tant que verrou (11).

3. Installation pour la mise-bas selon la revendication 1 ou 2, **caractérisée en ce que** les deux parois latérales (4, 5) de la cage pour la truie (3) peuvent pivoter dans la zone d'un axe vertical respectif (H) de telle sorte que les parois latérales (4, 5) peuvent être déplacées à volonté individuellement ou conjointement dans une position d'écartement (W) et fixées par la partie de paroi arrière servant de verrou (11, 11').

4. Installation pour la mise-bas selon l'une des revendications 1 à 3, **caractérisée en ce que** l'espace de mouvement (F) formé en position d'écartement (W) des parois latérales (4, 5) définit avec la partie de paroi arrière servant de verrou (11, 11'), une surface essentiellement trapézoïdale et celle-ci comprend un diamètre interne (D) permettant un retournement de l'animal dans la cage (3).

5. Installation pour la mise-bas selon l'une des revendications 1 ou 4, **caractérisée en ce que** dans la zone du verrou arrière (11) sont prévues plusieurs parois en tant que parties intermédiaires (12, 12', 12").

6. Installation pour la mise-bas selon l'une des revendications 1 à 5, **caractérisée en ce que** les parties intermédiaires de paroi (12, 12', 12") sont maintenues les unes avec les autres respectivement par le biais de liaisons articulées (G), directement aux extrémités des parois latérales (4, 5) et/ou des parties de parois transversales (8, 9).

7. Installation pour la mise-bas selon l'une des revendications 1 à 6, **caractérisée en ce qu'**au moins l'une des parties de paroi transversale (8, 9) est dotée, à la place de la partie intermédiaire (12, 12', 12") ou conjointement à celle-ci, d'une partie d'extraction pouvant être déplacée sur le plan de l'ouverture d'entrée (E) et fermant celle-ci en position d'écartement (W).

8. Installation pour la mise-bas selon l'une des revendications 1 à 7, **caractérisée en ce que** la cage pour la truie (3) définit, dans toutes les positions de fonctionnement, un espace de mouvement (P) extérieur dans lequel des porcelets peuvent être reçus en étant protégés.

9. Installation pour la mise-bas selon l'une des revendications 1 à 8, **caractérisée en ce que** l'installation pour la mise-bas (1, 1", 1"') présente, dans la zone de l'une de ses parois de séparation (2, 2', 2", 2''', la partie de paroi (14, 14', 14") efficace en tant que verrou (11') et celle-ci peut être déplacée indépendamment des parois latérales (4, 5) de la cage (3) dans la position d'utilisation.

10. Installation pour la mise-bas selon la revendication 9, **caractérisée en ce que** la partie de paroi (14, 14', 14") prévue comme verrou (11') peut pivoter de sa position de non utilisation à la position de fermeture.

11. Installation pour la mise-bas selon la revendication 9 ou 10, **caractérisée en ce que** la partie de paroi (14, 14', 14") peut pivoter en hauteur d'une position parallèle au sol en position de fermeture.

12. Installation pour la mise-bas selon l'une des revendications 9 à 11, **caractérisée en ce que** la partie de paroi (14, 14', 14") peut pivoter d'une position parallèle à la paroi de séparation (2', 2", 2"') vers l'espace intérieur (10) de l'installation (1, 1',1", 1"') d'un axe vertical (K).

13. Installation pour la mise-bas selon l'une des revendications 9 à 12, **caractérisée en ce que** la partie de paroi (14) est constituée de plusieurs parties reliées de façon articulée et/ou télescopique.

14. Installation pour la mise-bas selon l'une des revendications 9 à 13, **caractérisée en ce que**, dans la zone partielle (T, P) limitée par la partie de paroi (14, 14', 14") de l'installation (1), une partie formant une anse (16) est prévue en tant qu'élément de déviation des porcelets au niveau de l'une des parois de séparation (2).

15. Installation pour la mise-bas selon l'une des revendications 9 à 14, **caractérisée en ce que** la cage pour la truie (3) coopère dans la zone de ses parois latérales (4, 5) avec plusieurs parties de paroi (14').

16. Installation pour la mise-bas selon l'une des revendications 1 à 15, **caractérisée en ce que** l'installation de mise-bas (1, 1', 1", 1"') est conçue dans la zone d'au moins l'une des parois latérales (2, 2', 2") en tant que paroi de passage (18, 18') pouvant être franchie par la mère, de telle sorte que dans une installation de stalle (S, S'), un espace libre (17, 17') soit accessible.
